# EUROPÄISCHE PATENTSCHRIFT

(11) **EP 2 565 596 B1**
(45) Veröffentlichungstag und Bekanntmachung des Hinweises auf die Patenterteilung: **19.07.2017**
(21) Anmeldenummer: 12005941.5
(22) Anmeldetag: 17.08.2012
(51) Int. Cl.: G01F 23/284, H01P 3/08, H01P 3/12, H01P 3/16, H01Q 13/02, H01Q 19/08

(54) **Mikrowellensendegerät mit Verguss**
Microwave transmission device with grouting
Appareil d'émission de micro-ondes avec scellement

(30) Priorität: 01.09.2011 DE 102011112045
(43) Veröffentlichungstag der Anmeldung: 06.03.2013
(73) Patentinhaber: KROHNE Messtechnik GmbH, 47058 Duisburg (DE)
(72) Erfinder: Wegemann, Uwe, 47443 Moers (DE)
(74) Vertreter: Gesthuysen Patent- und Rechtsanwälte

(56) Entgegenhaltungen:
- EP-A2- 0 957 371
- WO-A1-02/42793
- DE-A1-102007 042 043
- DE-A1-102007 057 211

## Beschreibung

Die Erfindung betrifft ein Mikrowellensendegerät zur Emittierung von Mikrowellen gemäß dem Oberbegriff von Patentanspruch 1.

Ein vorgenanntes Mikrowellensendegerät ist beispielsweise aus der EP 0 957 371 A2 bekannt. In einer Vielzahl von industriellen Anwendungen werden Mikrowellensendegeräte der vorgenannten Art zur Abstandsmessung verwendet. Häufig ist es zum Beispiel erforderlich, den Füllstand eines Mediums wie einer Flüssigkeit oder eines Schüttguts in einem Behälter zu messen. Dazu werden Füllstandmessgeräte eingesetzt, die oftmals ein gattungsgemäßes Mikrowellensendegerät enthalten, wobei der Füllstand aus dem gemessenen Abstand zwischen dem oberhalb des Mediums im Freiraum angeordneten Mikrowellensendegeräts und der Oberfläche des Mediums abgeleitet wird. In dem Mikrowellensendegerät erzeugt die Elektronik Mikrowellen, der Welleneinkoppler koppelt die erzeugten Mikrowellen in den Wellenleiter ein und der Wellenleiter führt die eingekoppelten Mikrowellen zum Wellenabstrahlbereich, in dem die geführten Wellen in Freiraumwellen umgesetzt werden. Die Freiraumwellen werden im Wesentlichen in Richtung auf das Medium abgestrahlt und von der Oberfläche des Mediums zurück in Richtung auf das Füllstandmessgerät reflektiert, wobei das Mikrowellensendegerät üblicherweise auch als Mikrowellenempfänger dient und den Abstand nach einem der bekannten Radarverfahren berechnet. Oftmals leitet das Mikrowellensendegerät aus dem berechneten Abstand auch den Füllstand ab. Selbstverständlich können Mikrowellensendegeräte nicht nur in Füllstandmessgeräten, sondern auch in beliebigen Messgeräten eingesetzt werden, die den Abstand zwischen dem Mikrowellensendegerät und einer Oberfläche nach einem der bekannten Radarverfahren bestimmen. Gleichwohl wird weiterhin von einem Füllstandmessgerät oder von einem Mikrowellensendegerät für ein solches Füllstandmessgerät gesprochen.

Aus der WO 03/085365 A1 ist ein Mikrowellensender für ein Füllstandmessgerät zur radarbasierten Bestimmung des Füllstands eines Mediums in einem Behälter mit einer Elektronik, einer Antenne und einem Gehäuse bekannt, wobei die Elektronik und die Antenne in einer Aushöhlung des Gehäuses untergebracht sind und die Aushöhlung zumindest in Bezug auf die Atmosphäre des Behälters, in dem sich das Gehäuse befindet, dicht ist. Durch diese Struktur sind sowohl die Elektronik als auch die Antenne gegen aggressive Umgebungsbedingungen und gegen chemisch und mechanisch wirkende Einflüsse geschützt.

Gegenstand der DE 10 2011 010 801 ist ein Mikrowellensendegerät zur Emittierung von Mikrowellen für ein Füllstandmessgerät mit einer Elektronik, einem Welleneinkoppler, einem Hohleiter und einem Gehäuse, wobei Elektronik, Welleneinkoppler und Hohlleiter in Inneren des Gehäuses angeordnet sind und wobei Hohlräume im Gehäuse und in den Mikrowellen führenden Strukturen vollständig mit einem dielektrischen Verguss gefüllt sind, so dass die Ausbreitung der Mikrowellen im Verguss stattfindet. Durch die Ausbreitung der Mikrowellen im Verguss und nicht im Freiraum wird die Mindestgröße der Wellen führenden Strukturen wie des Hohlleiters reduziert. Die Elektronik, der Welleneinkoppler und der Hohlleiter werden durch geeignete Vorrichtungen am Gehäuse fixiert. Durch den Verguss von der Elektronik und dem Welleneinkoppler wird die mechanische Robustheit gegenüber Schocks und Vibrationen, wie sie in mechanisch rauen Umgebungen auftreten, erhöht.

Die Offenlegungsschrift WO 02/42793 A1 offenbart eine Durchführung für ein Hochfrequenzsignal. In einer Ausgestaltung ist zwischen einem Einzelleiter und einem Koaxialleiter ein Übertrager vorgesehen, der zum Schutz gegenüber dem Prozessmedium in ein Vergussmaterial eingebettet ist.

Aus dem Stand der Technik bekannte Mikrowellensendegeräte und Füllstandmessgeräte besitzen ein Gehäuse und Fixiervorrichtungen für Komponenten wie die Elektronik, den Welleneinkoppler und den Wellenleiter, wobei die Fixiervorrichtungen die Komponenten sowohl im Gehäuse als auch zueinander ausrichten und fixieren. Zusätzlich ist ein Verschluss für das Gehäuse mit einem Dichtmittel und einer Fixiervorrichtung zur Befestigung am Gehäuse erforderlich, so dass die Komponenten nach dem Einbringen in das und Fixieren in dem Gehäuse durch das dann verschlossene Gehäuse gegen Umgebungseinflüsse beispielweise nach DIN EN 60529 IP68 geschützt werden. Die Fixiervorrichtungen für die Komponenten und der Verschluss mit dem Dichtmittel und der Fixiervorrichtung erhöhen sowohl den konstruktiven Aufwand als auch den Herstellungs- und Montageaufwand und erhöhen damit auch die Kosten.

Aufgabe der vorliegenden Erfindung ist die Angabe eines Mikrowellensendegerätes mit reduziertem Konstruktions-, Herstellungs- und Montageaufwand und verringerten Kosten bei gleichzeitig hoher mechanischer Robustheit und Stabilität.

Das erfindungsgemäße Mikrowellensendegerät, bei dem die zuvor hergeleitete und aufgezeigte Aufgabe gelöst ist, ist zunächst und im Wesentlichendurch die Merkmale des Kennzeichenteils von Patentanspruch 1 gekennzeichnet. Es stellte sich unerwartet heraus, dass allein der Verguss die Elektronik, den Welleneinkoppler und den Wellenleiter zueinander auf mechanisch robuste Weise und mit hoher Stabilität fixiert. Als Verguss können verschiedene Materialien eingesetzt werden, wobei darauf zu achten ist, dass das Vergussmaterial während der Verarbeitung eine ausreichende Fließfähigkeit besitzt, so dass die Komponenten für die Fixierung in ausreichendem Maße umschlossen werden. Nach dem Aushärten des Vergussmaterials muss dieses geeignete mechanische, elektrische, thermische und chemische Eigenschaften besitzen. So muss das Vergussmaterial die Komponenten mechanisch fixieren, darf aber beispielsweise weder in der Elektronik übermäßig hohe Kriechströme noch bei Temperaturänderungen übermäßig große mechanische Spannungen zwischen den Komponenten und insbesondere zwischen den Bauelementen der Elektronik verursachen. Darüber hinaus muss das Vergussmaterial chemische Beständigkeit gegenüber Umgebungseinsflüssen und Alterungsbeständigkeit besitzen. Bei Einsatz der Mikrowellensendegeräte in Füllstandmessgeräten werden die Umgebungseinflüsse maßgeblich durch das Medium im Behälter bestimmt, dessen Füllstand gemessen wird.

Die Verwendung des erfindungsgemäßen Mikrowellensendegerätes mit einem Verguss anstelle der aus dem Stand der Technik bekannten Mikrowellensendegeräte hat den Vorteil eines reduzierten Aufwands bei der mechanischen Konstruktion durch den Entfall der Vorrichtungen zur Fixierung der Komponenten und den Vorteil des Entfalls des Verschlusses mit Fixiervorrichtung und Dichtungsmittel, wodurch auch der Aufwand bei der Herstellung und der Montage reduziert wird und die Kosten gesenkt werden.

Bei einer ganz besonders bevorzugten Ausgestaltung umhüllt der Verguss zusammen mit dem Wellenabstrahlbereich die Komponenten Elektronik, Welleneinkoppler und Wellenleiter vollständig, so dass nur der Verguss und der Wellenabstrahlbereich des Wellenleiters mit der Umgebung in unmittelbaren Kontakt treten. Der Wellenabstrahlbereich bezeichnet dabei jene Oberfläche des Wellenleiters, an welcher die geführten Mikrowellen in Freiraumwellen überführt werden.

Bei einer alternativen bevorzugten Ausgestaltung umhüllt der Verguss neben der Elektronik, dem Welleneinkoppler und dem Wellenleiter auch den Wellenabstrahlbereich vollständig. Bei dieser Ausgestaltung tritt der Wellenleiter nicht mehr unmittelbar mit der Umgebung in Kontakt, so dass insbesondere die chemische Beständigkeit des Wellenleiters gegen Umgebungseinflüsse von untergeordneter Bedeutung ist.

Bei einer weiteren bevorzugten Ausgestaltung erfolgt die Führung der Mikrowellen in dem Wellenleiter durch eine Umhüllung des Wellenleiters mit einem elektrisch leitenden Material. Erfindungsgemäß ist vorgesehen, dass die Führung der Mikrowellen in dem Wellenleiter durch die sich bei Verwendung von Materialien verschiedener relativer Permittivitäten und relativer Permeabilitäten für den Wellenleiter und den Verguss ausbildende - dielektrische - Grenzschicht zwischen dem Verguss und dem Wellenleiter erfolgt. Die Führung der Mikrowellen an der Grenzschicht hat den Vorteil des Entfallens der elektrisch leitenden Umhüllung, wodurch Herstellungsaufwand und Herstellungskosten gesenkt werden. Auch kann die Führung der Mikrowellen durch eine Kombination beider Methoden erfolgen, so dass der Wellenleiter nur teilweise mit dem elektrisch leitenden Material umhüllt ist.

In einem weiteren bevorzugten Ausführungsbeispiel sind in dem Verguss Befestigungsvorrichtungen zur Befestigung des Mikrowellensendegeräts ausgebildet. Das gemeinsame Kabel der elektrischen Versorgung von und Kommunikation mit der Elektronik ist mittels einer Verbindungsvorrichtung zur Herstellung einer lösbaren mechanischen und elektrischen Verbindung mit dem Mikrowellenmessgerät verbunden, wobei ein Teil der Verbindungsvorrichtung fest mit dem Kabel und ein anderer Teil durch den Verguss fest mit dem Mikrowellensendegerät verbunden ist.

In einem weiteren besonders bevorzugten Ausführungsbeispiel dient der Verguss dem Schutz gegen Umgebungseinsflüsse, insbesondere genügt der Schutz der Norm DIN EN 60529 IP68. Zusätzlich stellt der Verguss eine Vergusskapselung im Sinne des Zündschutzes dar und genügt insbesondere der Norm EN 60079-18.

Im Einzelnen gibt es nun verschiedene Möglichkeiten, das erfindungsgemäße Mikrowellensendegerät auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen in Richtung der Längsachse geschnittener Seitenansicht
- Fig. 1: ein ein nicht erfindungsgemäßes Mikrowellensendegerät, wobei die Führung der Mikrowellen in einem hornförmigen Wellenleiter durch eine elektrisch leitende Umhüllung erfolgt,
- Fig. 2a: ein Ausführungsbeispiel eines erfindungsgemäßen Mikrowellensendegeräts, wobei die Führung der Mikrowellen durch eine Grenzschicht erfolgt,
- Fig. 2b: ein weiteres Ausführungsbeispiel eines erfindungsgemäßen Mikrowellensendegeräts, bei dem die Führung der Mikrowellen sowohl durch die Grenzschicht als auch die teilweise Umhüllung mit einem elektrisch leitenden Material erfolgt,
- Fig. 2c: ein weiteres Ausführungsbeispiel eines erfindungsgemäßen Mikrowellensendegeräts, bei dem die Führung der Mikrowellen wie im in Fig. 2b dargestellten Ausführungsbeispiel erfolgt,
- Fig. 3: ein weiteres Ausführungsbeispiel eines erfindungsgemäßen Mikrowellensendegeräts mit einem stabförmigen Wellenleiter,
- Fig. 4: ein weiteres Ausführungsbeispiel eines erfindungsgemäßen Mikrowellensendegeräts mit einem mehrteiligen Verguss und einem mehrteiligen Wellenleiter und
- Fig. 5: ein letztes Ausführungsbeispiel eines erfindungsgemäßen Mikrowellensendegeräts mit einem planaren Welleneinkoppler.

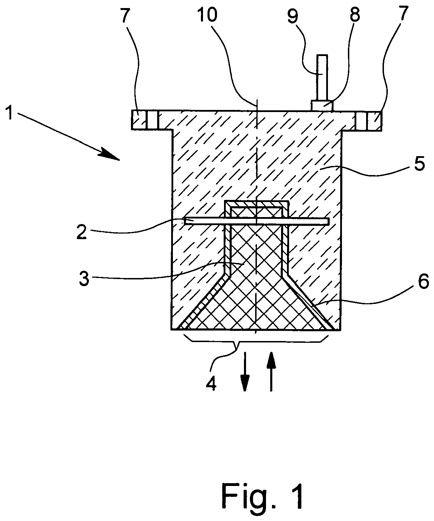

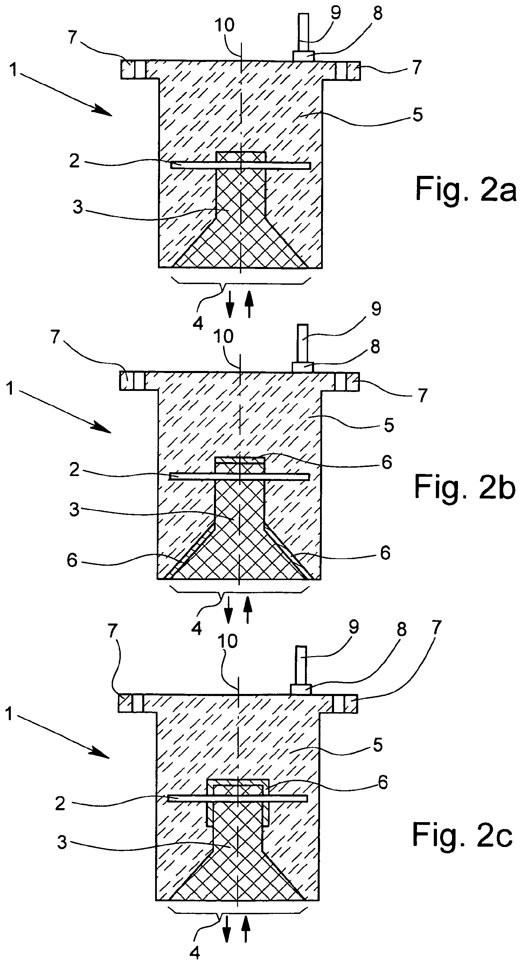

In den Fig. 2 bis Fig. 5 sind jeweils erfindungsgemäße Mikrowellensendegeräte 1 dargestellt, in Fig. 1 ist ein nicht erfindungsgemäßes Mikrowellensendegerät dargestellt, die eine Elektronik 2, einen hier nicht explizit dargestellten Welleneinkoppler, einen Wellenleiter 3 und einen Wellenabstrahlbereich 4 aufweisen. Ein Verguss 5 fixiert dabei die Elektronik 2, den Wellenleiter 3 und den auf dem Träger der Elektronik angeordneten Wellenleiter mechanisch robust zueinander, wobei die Elektronik 2, der Welleneinkoppler und der Wellenleiter 3 bis auf den Wellenabstrahlbereich 4 von dem Verguss 5 vollständig umhüllt sind.

Die Führung der Mikrowellen im Wellenleiter 3 erfolgt durch eine Umhüllung 6 mit einem elektrisch leitenden Material (z.B. Fig. 1) und / oder durch die Grenzschicht zwischen Wellenleiter 3 und Verguss 5 (z.B. Fig. 2a; Kombination Fig. 2b, 2c).

Im Verguss 5 sind Befestigungsvorrichtungen 7 in Form von Aufnahmen für Schrauben zur Befestigung des Mikrowellensendegeräts 1 zum Beispiel in einem Behälter mit einem Medium, dessen Füllstand zu bestimmen ist, ausgebildet. Ferner erfolgt der elektrische Anschluss der Elektronik 2 über ein Kabel 9, für das im Verguss zur Aufnahme von außerhalb des Mikrowellensendegerätes 1 auf das Kabel 9 ausgeübten mechanischen Beanspruchungen eine Kabeldurchführung 8 mit - hier nicht sichtbarer - Zugentlastung ausgebildet ist.

Die aufgeführten Ausführungsbeispiele erfindungsgemäßer Mikrowellensendegeräte 1 sind durch den Verguss 5 gemäß der Norm DIN EN 60529 IP68 gegen Berührung, Staubeindringung und Wassereindringung geschützt, der Verguss 5 stellt des Weiteren eine Verkapselung im Sinne des Zündschutzes gemäß der Norm EN 60079-18 dar und die Mikrowellensendegeräte 1 sind darüber hinaus gemäß der Norm 60079-15 eigensicher ausgebildet. Der Wellenleiter 3 und der Wellenabstrahlbereich 4 der dargestellten Mikrowellensendegeräte 1 sind rotationssymmetrisch bezüglich einer Längsachse 10 ausgebildet. Dagegen sind sowohl die Querschnittsfläche als auch die Längsschnittsfläche des Vergusses 5 im Wesentlichen rechteckig ausgebildet, so dass die äußere Form des Vergusses 5 im Wesentlichen ein Quader ist. Selbstverständlich sind auch andere äußere Formen des Vergusses möglich, zum Beispiel mit einer im Wesentlichen kreisrunden Querschnittsfläche. Andere, hier nicht dargestellten Ausführungsbeispiele weisen auch im Querschnitt rechteckige Wellenleiter auf. Diese sind aufgrund der Vergussrealisierung einfach zu fertigen. Da die Abstrahlfläche dann ebenfalls rechteckig ist, kann mit der Geometrie der Abstrahlfläche Einfluss auf die Bündelung des Radarstrahles genommen werden. Durch Wahl der Einbauposition können dann besser Störreflektionen ausgeblendet werden.

Die von der Elektronik 2 eines erfindungsgemäßen Mikrowellensendegeräts 1 erzeugten Mikrowellen werden von dem - hier nicht dargestellten - Mikrowelleneinkoppler in den Wellenleiter 3 eingekoppelt, der aus mindestens einem dielektrischen Vergussmaterial besteht und den Welleneinkoppler formschlüssig umgibt. Der Wellenleiter 3 führt die sich in seinem Inneren ausbreitenden Mikrowellen im Wesentlichen entlang der Längsachse 10 in Richtung auf den Wellenabstrahlbereich 4, in dem die geführten Mikrowellen in Freiraumwellen überführt werden, wobei auch die Ausbreitung der Freiraumwellen im Wesentlichen entlang der Längsachse 10 erfolgt. Die von der Oberfläche des Mediums, dessen Abstand zum Mikrowellensendegerät 1 zu bestimmen ist, zurück in Richtung auf das Mikrowellensendegerät 1 reflektierten Mikrowellen gelangen über den Wellenabstrahlbereich 4, den Wellenleiter 3 und den Welleneinkoppler schließlich zur Elektronik 2, welche mit Hilfe der empfangenen reflektierten Mikrowellen den Abstand zwischen Mikrowellensendegerät und Oberfläche des Mediums nach einem der bekannten Radarverfahren berechnet.

Das in Fig. 1 dargestellte Ausführungsbeispiel eines nicht erfindungsgemäßen Mikrowellensenders 1 besitzt einen Wellenleiter 3, der senkrecht zur Längsachse 10 im Bereich des auf dem Träger der Elektronik 2 angeordneten Welleneinkopplers zunächst einen konstanten Durchmesser aufweist, der sich dann in Richtung auf den Wellenabstrahlbereich 4 aufweitet, so dass der Wellenleiter 3 die Form eines Horns aufweist. Der Wellenabstrahlbereich 4 ist eine ebene Kreisfläche senkrecht zur Längsachse 10, wobei die Fläche im Wesentlichen bündig mit dem Verguss 5 abschließt, so dass das Mikrowellensendegerät 1 kompakt und mechanisch robust ist. Die Führung der Mikrowellen im Wellenleiter 3 erfolgt durch die Umhüllung 6 des Wellenleiters mit einem elektrisch leitenden Material. Durch die Ausbreitung der Mikrowellen in dem dielektrischen Material des Wellenleiters 3, das gleich dem Material des Vergusses 5 ist, sind die Wellen führenden Strukturen kleiner dimensioniert als bei Ausbreitung der Mikrowellen in Gas, da die Permittivität des Materials des Wellenleiters 3 höher ist als die von Gas. Durch die kleiner dimensionierten Wellen führenden Strukturen ist das Mikrowellensendegerät 1 insgesamt kompakter.

Das in Fig. 2a gezeigte Ausführungsbeispiel eines erfindungsgemäßen Mikrowellensenders 1 unterscheidet sich von dem in Fig. 1 gezeigten Ausführungsbeispiel dadurch, dass die Führung der Mikrowellen nicht durch die elektrisch leitende Umhüllung 6 des Wellenleiters 3 erfolgt, sondern durch die Grenzschicht zwischen dem Wellenleiter 3 und dem Verguss 5. Die Grenzschicht bildet sich aus, da der Wellenleiter 3 und der Verguss 5 aus zwei Materialien mit verschiedenen relativen Permittivitäten und relativen Permeabilitäten bestehen.

In den in den Fig. 2b und Fig. 2c aufgeführten Ausführungsbeispielen erfolgt die Führung der Mikrowellen sowohl wie in dem in Fig. 2a gezeigten Ausführungsbeispiel eines Mikrowellensendegeräts 1 durch die Grenzschicht zwischen dem Wellenleiter 3 und dem Verguss 5 als auch durch die partielle Umhüllung 6 des Wellenleiters 3 mit einem elektrisch leitenden Material. Durch die Kombination beider Wellenführungsarten ist die Führung der Wellen im Wellenleiter 3 optimiert.

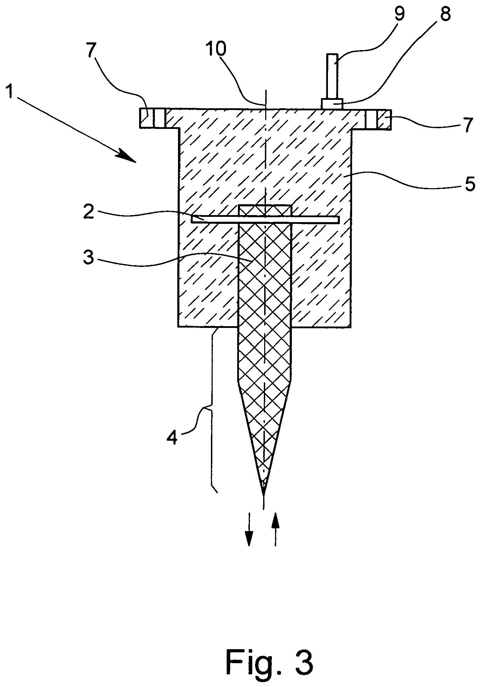

Das Ausführungsbeispiel in Fig. 3 unterscheidet sich von dem in Fig. 2a gezeigten dadurch, dass der Wellenleiter 3 nicht als ein Horn, sondern als ein Stab ausgebildet ist. Sind die Wellenleiter 3 beider Ausführungsbeispiele im Bereich des auf der Elektronik 2 angeordneten Welleneinkopplers noch gleich ausgeformt, so ist der Durchmesser des in Fig. 3 dargestellten Ausführungsbeispiels im gesamten Bereich, in dem der Wellenleiter 3 von dem Verguss 5 umhüllt ist und auch eine gewisse Strecke entlang der Längsachse 10 darüber hinaus, konstant, um schließlich konisch zuzulaufen und in einer auf der Längsachse 10 liegenden Spitze zu enden. Der Teil des Wellenleiters 3, der aus dem Verguss 5 herausragt, ist der Wellenabstrahlbereich 4, der im Gegensatz zu dem in Fig. 2a gezeigten Ausführungsbeispiel eine dreidimensionale Struktur und nicht eine zweidimensionale Fläche ist, wodurch die Ausbreitungscharakteristik im Freiraum an die gegebenen Anforderungen angepasst ist. Selbstverständlich sind auch weitere Ausformungen des Wellenleiters 3 und der dreidimensionalen Struktur des Wellenabstrahlbereichs 4 möglich.

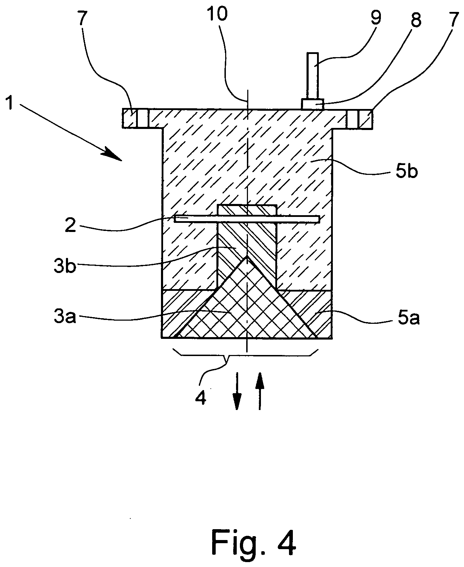

Das in Fig. 4 dargestellte Ausführungsbeispiel unterscheidet sich von dem in Fig. 2a dargestellten Ausführungsbeispiel in den die Grenzschicht zur Führung der Mikrowellen bildenden Materialien. In dem in Fig. 2a gezeigtem Ausführungsbeispiel bildet sich die Grenzschicht zwischen dem einen Material des Wellenleiters 3 und dem einen anderen Material des Vergusses 5 aus, wohingegen in dem Ausführungsbeispiel in Fig. 4 sowohl der Wellenleiter 3 als auch der Verguss 5 aus jeweils zwei unterschiedlichen Vergussmaterialien bestehen, wobei sich die relativen Permittivitäten und die relativen Permeabilitäten aller vier Materialien voneinander unterscheiden. Der vordere Teil 3a des Wellenleiters 3 aus dem ersten dielektrischen Material enthält den Wellenabstrahlbereich 4 und weist die Form eines Kegels auf, der sich entlang der Längsachse 10 in Richtung entgegen der Ausbreitungsrichtung der Mikrowellen verjüngt und in einer Spitze auf der Längsachse 10 endet. Der zylinderförmige konzentrisch um die Längsachse 10 angeordnete hintere Teil 3b des Wellenleiters 3 aus dem zweiten dielektrischen Material umschließt den Welleneinkoppler formschlüssig und in der in Ausbreitungsrichtung gelegenen Stirnseite ist über den gesamten Zylinderdurchmesser eine negative Kegelform ausgebildet, welche den komplementierenden Teil des Kegels des vorderen Teils 3a des Wellenleiters 3 formschlüssig aufnimmt. Der Verguss 5 besteht im vorderen Bereich 5a, der zwischen der Ebene, die mit der Fläche des Abstrahlbereichs 4 zusammenfällt, und der Ebene, die mit der in Ausbreitungsrichtung der Mikrowellen vorderen Stirnfläche des hinteren Teils des Wellenleiters 3 zusammenfällt, liegt, aus einem dritten dielektrischen Material und im hinteren Bereich 5b aus einem vierten dielektrischen Material, wobei die äußere Quaderform des Vergusses 5 erhalten bleibt. Der Einsatz von vier Materialien mit unterschiedlichen relativen Permittivitäten und relativen Permeabilitäten verbessert die Wellenführungseigenschaften der Grenzschicht.

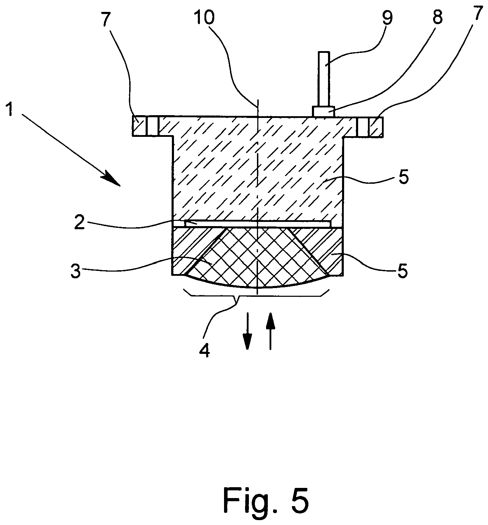

In Fig. 5 wird ein letztes Ausführungsbeispiel gezeigt, dass sich in mehreren Merkmalen von dem in Fig. 4 gezeigten Ausführungsbeispiel unterscheidet. Der zylindrische Teil des Wellenleiters 3 entfällt und aus dem kegelförmigen Teil des Wellenleiters 3 wird ein Kegelstumpf, dessen Wellenabstrahlbereich 4 zur Anpassung der Ausbreitungscharakteristik der Freiraumwellen nach außen gewölbt ist. Der Kegelstumpf ist in dem in Fig. 5 dargestellten Ausführungsbeispiel das einzig verbliebene Element, in dem sich die Mikrowellen ausbreiten. Der Welleneinkoppler ist eine planare auf dem Träger der Elektronik 2 angeordnete Struktur mit einer nur geringen Ausdehnung entlang der Längsachse 10. Der planare Welleneinkoppler und der Entfall des zylindrischen Teils des Wellenleiters 3 reduzieren die Ausdehnung des Mikrowellensenders 1 entlang der Längsachse im Vergleich zu den anderen Ausführungsbeispielen.

## Patentansprüche

1. Mikrowellensendegerät (1) zur Emittierung von Mikrowellen mit einer Elektronik (2), einem Welleneinkoppler, einem Wellenleiter (3) und einem Wellenabstrahlbereich (4), wobei die Elektronik (2), der Welleneinkoppler und der Wellenleiter (3) einen gemeinsamen Verguss (5) aufweisen, wobei zumindest die Elektronik (2), der Welleneinkoppler und der Wellenleiter (3) durch den Verguss (5) zueinander fixiert sind,
**dadurch gekennzeichnet, dass**
- der Wellenleiter (3) und der Verguss (5) aus zwei Materialien mit verschiedenen relativen Permittivitäten und relativen Permeabilitäten bestehen,
- eine Grenzschicht ausgebildet ist, da der Wellenleiter (3) und der Verguss (5) aus den zwei Materialien mit verschiedenen relativen Permittivitäten und relativen Permeabilitäten bestehen,
- die Grenzschicht so ausgebildet ist, dass eine Führung der Mikrowellen durch die Grenzschicht erfolgt.

2. Mikrowellensendegerät (1) nach Anspruch 1, **dadurch gekennzeichnet, dass** der Verguss (5) zusammen mit dem Wellenabstrahlbereich (4) die Elektronik (2), den Welleneinkoppler und den Wellenleiter (3) vollständig umhüllt.

3. Mikrowellensendegerät (1) nach Anspruch 1, **dadurch gekennzeichnet, dass** der Verguss (5) die Elektronik (2), den Welleneinkoppler und den Wellenleiter (3) vollständig umhüllt.

4. Mikrowellensendegerät (1) nach einem der Ansprüche 1 bis 3, **dadurch gekennzeichnet, dass** zur Führung der Mikrowellen der Wellenleiter (3) teilweise von einem elektrisch leitenden Material (6) umgeben ist.

5. Mikrowellensendegerät (1) nach einem der Ansprüche 1 bis 4, **dadurch gekennzeichnet, dass** der Verguss (5) ein Schutz gegen äußere Einflüsse ist, der Schutz insbesondere der Norm DIN EN 60529 IP68 genügt.

6. Mikrowellensendegerät (1) nach einem der Ansprüche 1 bis 5, **dadurch gekennzeichnet, dass** der Verguss (5) eine Verkapselung im Sinne des Zündschutzes ist, die Vergusskapselung insbesondere der Norm EN 60079-18 genügt.

## Claims

1. Microwave-sending device (1) for emitting microwaves having electronics (2), a wave coupler, a waveguide (3) and a wave-emitting region (4), wherien the electronics (2), the wave coupler and the waveguide (3) have a common casting (5), wherein at least the electronics (2), the wave coupler and the waveguide (3) are affixed to one another by means of the casting (5), **characterized in, that**
- the waveguide (3) and the casting (5) consist of two materials with differing relative permittivities and relative permeabilities,
- a boundary layer is formed, since the waveguide (3) and the casting (5) consist of two materials with differing relative permittivities and relative permeabilities,
- the boundary layer is formed in such a manner that guiding the microwaves occurs through the boundary layer.

2. Microwave-sending device (1) according to claim 1, **characterized in that** the casting (5), together with the wave-emitting region (4), completely encloses the electronics (2), the wave coupler and the waveguide (3).

3. Microwave-sending device (1) according to claim 1, **characterized in that** the casting (5) completely encloses the electronics (2), the wave coupler and the waveguide (3).

4. Microwave-sending device (1) according to any one of claims 1 to 3, **characterized in that** the waveguide (3) is at least partially surrounded by an electrically conductive material (6) for guiding the microwaves.

5. Microwave-sending device (1) according to any one of claims 1 to 4, **characterized in that** the casting (5) is a protection against external influences, the protection conforming, in particular, to the standard DIN EN 60529 IP68.

6. Microwave-sending device (1) according to any one of claims 1 to 5, **characterized in that** the casting (5) is an encapsulation in the sense of ignition protection, the encapsulation conforming, in particular, to the standard EN 60079-18.

## Revendications

1. Appareil émetteur de micro-ondes (1) destiné à émettre des micro-ondes, comportant un système électronique (2), un coupleur d'ondes d'entrée, un guide d'ondes (3) et une zone de rayonnement d'ondes (4), dans lequel le système électronique (2), le coupleur d'ondes d'entrée et le guide d'ondes (3) présentent un enrobage (5), dans lequel au moins le système électronique (2), le coupleur d'ondes d'entrée et le guide d'ondes (3) sont fixés les uns aux autres au moyen de l'enrobage (5),
- le guide d'ondes (3) et l'enrobage (5) sont constitués de deux matériaux ayant des permittivités relatives et des perméabilités relatives différentes,
- une couche limite est réalisée à l'endroit où le guide d'ondes (3) et l'enrobage (5) sont constitués des deux matériaux ayant des permittivités relatives et des perméabilités relatives différentes,
- la couche limite est réalisée de manière à produire un guidage des micro-ondes à travers la couche limite.

2. Appareil émetteur de micro-ondes (1) selon la revendication 1, **caractérisé en ce que** l'enrobage (5), en association avec la zone de rayonnement d'ondes (4), enveloppe entièrement le système électronique (2), le coupleur d'ondes d'entrée et le guide d'ondes (3).

3. Appareil émetteur de micro-ondes (1) selon la revendication 1, **caractérisé en ce que** l'enrobage (5) enveloppe entièrement le système électronique (2), le coupleur d'ondes en entrée et le guide d'ondes (3).

4. Appareil émetteur de micro-ondes (1) selon l'une quelconque des revendications 1 à 3, **caractérisé en ce que** le guide d'ondes (3) est partiellement entouré d'un matériau (6) électriquement conducteur pour le guidage des micro-ondes.

5. Appareil émetteur de micro-ondes (1) selon l'une quelconque des revendications 1 à 4, **caractérisé en ce que** l'enrobage constitue une protection contre des influences externes, la protection répondant notamment à la norme DIN EN 60529 IP68.

6. Appareil émetteur de micro-ondes (1) selon l'une quelconque des revendications 1 à 5, **caractérisé en ce que** l'enrobage (5) est une encapsulation au sens de la protection contre l'explosion, laquelle encapsulation répond notamment à la norme EN 60079-18.
